# EUROPEAN PATENT SPECIFICATION

(11) **EP 3 278 986 B1**
(45) Date of publication and mention of the grant of the patent: **20.11.2019**
(21) Application number: 16772741.1
(22) Date of filing: 28.03.2016
(51) Int. Cl.: B41J 2/165, B41J 11/00, C09D 11/101, C09D 11/38

(54) **MAINTENANCE METHOD, IMAGE FORMATION METHOD, MAINTENANCE DEVICE, AND IMAGE FORMATION DEVICE**
WARTUNGSVERFAHREN, BILDERZEUGUNGSVERFAHREN, WARTUNGSVORRICHTUNG UND BILDERZEUGUNGSVORRICHTUNG
PROCÉDÉ DE MAINTENANCE, PROCÉDÉ DE FORMATION D'IMAGE, DISPOSITIF DE MAINTENANCE ET DISPOSITIF DE FORMATION D'IMAGE

(30) Priority: 30.03.2015 JP 2015069683
(43) Date of publication of application: 07.02.2018
(73) Proprietor: Konica Minolta, Inc., Tokyo 100-7015 (JP)
(72) Inventor: IKEDA, Masashi, Tokyo 100-7015 (JP); TOKIMATSU, Hiroyuki, Tokyo 100-7015 (JP)
(74) Representative: Henkel & Partner mbB
(86) International application number: PCT/JP2016/059930
(87) International publication number: WO 2016/158860

(56) References cited:
- WO-A1-2013/150802
- JP-A- H02 198 859
- JP-A- H10 235 894
- JP-A- H11 129 503
- JP-A- 2006 334 964
- JP-A- 2008 105 403
- JP-A- 2008 132 786
- JP-A- 2010 280 067
- JP-A- 2010 280 067
- JP-A- 2014 054 834
- JP-A- 2014 168 911
- JP-A- 2014 168 911
- JP-A- 2015 054 496
- JP-A- 2015 054 496

## Description

### Technical Field

The present invention relates to a maintenance method, an image formation method, a maintenance device, and an image formation device.

### Background Art

An inkjet image formation method is a method for forming an image by discharging droplets of an ink from a nozzle of a discharge head installed in an inkjet image formation device and causing the droplets to land on a recording medium. The inkjet image formation method makes it possible to form a high definition image simply and inexpensively because an ink lands only on a portion to which a color is desirably attached in a recording medium.

In the inkjet image formation method, a small amount of ink of several pL to several tens of pL is discharged from a discharge port of a nozzle. Therefore, if an ink adheres to the vicinity of a surface having the discharge port of the nozzle (hereinafter also simply referred to as "nozzle surface") of the discharge head, due to a surface tension or the like of the adhering ink, a subsequently discharged ink cannot be discharged in a desired direction (hereinafter, a state in which an ink cannot be discharged in a desired direction is also simply referred to as "discharge bending"). When discharge bending occurs, it is difficult to cause a desired amount of ink droplets to land on a desired portion of a recording medium, and definition of an image may be lowered.

In order to reduce the above influence of an ink adhering to a nozzle surface, there is known a technique for removing the adhering ink by performing maintenance of the nozzle surface in an inkjet image formation method. At this time, if the nozzle surface is scratched when the adhering ink is removed, water repellency of the nozzle is lowered, and discharge bending easily occurs. As a method for removing an adhering ink while generation of scratches on a nozzle surface is suppressed, for example, Patent Literatures 1 and 2 describe an image formation device capable of absorbing an ink adhering to the nozzle surface by bringing an ink absorber into contact with the nozzle surface.

In addition, in an ink used in an inkjet image formation method, there is also known a technique for causing the ink to reversibly undergo a sol-gel phase transition upon temperature change by inclusion of a wax which reversibly undergoes a phase transition upon temperature change (hereinafter also simply referred to as a "wax"). In such an ink, when the temperature of the ink is lowered due to landing on a recording medium, the ink becomes gel due to crystallization of the wax. Therefore, it is possible to control wet spreading of ink droplets after the ink droplets land on a recording medium, and to prevent gathering with neighboring droplets. Therefore, it is possible to form a higher definition image (For example, Patent Literatures 3 and 4).

Patent Literature 5 discloses a nozzle surface wiping device capable of wiping a nozzle surface from two directions with a simple mechanism, the nozzle surface wiping device comprising a case that houses a wiping web for wiping a nozzle surface, a supply shaft that feeds out the wiping web and that is driven by a supply shaft rotation drive motor, a take-up shaft that winds up the wiping web and that is driven by a take-up shaft rotation drive motor, and a pressing roller combined with a spring for pressing the wiping web to the nozzle surface. In the nozzle surface wiping device, the travelling speed of the wiping web at a downstream side of the pressing roller is higher than the travelling speed of the wiping web at an upstream side of the pressing roller, so as to increase the tension of the wiping web as compared with a case of the same travelling speed, and to move the pressing roller in a direction against the pressing force of the spring.

### Citation List

### Patent Literature

Patent Literature 1: JP 2012-6155 A
Patent Literature 2: JP 2012-6156 A
Patent Literature 3: JP 2006-193745 A
Patent Literature 4: JP 2010-17710 A
Patent Literature 5: JP 2014-054834 A

### Summary of Invention

### Technical Problem

When a wax-containing ink adheres to a nozzle surface, even when maintenance of the nozzle surface is performed, a wax which has been cooled and has become gel tends to remain on the nozzle surface. Therefore, if image formation with a wax-containing ink is performed for a long period of time, a possibility of occurrence of discharge bending due to an adhering wax and consequent reduction in definition of an image is further enhanced. Therefore, there is a high demand for a maintenance method of a nozzle surface, capable of more reliably removing matters adhering to a nozzle surface and suppressing occurrence of discharge bending even when image formation with a wax-containing ink is performed for a long period of time.

The present invention has been achieved in view of the above circumstances. An object of the present invention is to provide, in a wax-containing ink, a maintenance method of a nozzle surface hardly causing discharge bending even when image formation is performed for a long period of time, an image formation method including such a maintenance method, a maintenance device capable of performing such a maintenance method, and an image formation device including such a maintenance device. The invention is defined by the claims.

### Solution to Problem

In a first aspect, the present invention thus relates to a maintenance method as defined in claim 1. The maintenance method is a maintenance method of a nozzle surface provided with a discharge port of a nozzle of a discharge head capable of discharging an inkjet ink containing a wax which reversibly undergoes a phase transition upon temperature change, a photopolymerizable compound, and a photopolymerization initiator, cured by irradiation with an active ray, characterized by including
a step of moving an ink absorber at a speed of 10 mm/s or more and 1000 mm/s or less while the ink absorber is in contact with the nozzle surface at a contact pressure of 1 mg/mm² or more and 1000 mg/mm² or less.

In a second aspect, the present invention relates to an image formation method as defined in claim 3. The image formation method includes:
a first step of discharging droplets of an inkjet ink containing a wax which reversibly undergoes a phase transition upon temperature change, a photopolymerizable compound, and a photopolymerization initiator, cured by irradiation with an active ray from a discharge port of a nozzle provided on a nozzle surface of a discharge head to cause the droplets to land on a recording medium,
a second step of irradiating the droplets of the inkjet ink which have landed with an active ray to cure the droplets, and
a third step of performing maintenance of the nozzle surface of the discharge head, in which the third step is performed including the maintenance method according to the first aspect.

In a third aspect, the present invention relates to a maintenance device as defined in claim 6. The maintenance device includes:
an installation unit for installing an ink absorber; and
a movement unit for moving the ink absorber at a speed of 10 mm/s or more and 1000 mm/s or less while the ink absorber is in contact with a nozzle surface provided with a discharge port of a nozzle of a discharge head capable of discharging an inkjet ink containing a wax which reversibly undergoes a phase transition upon temperature change, a photopolymerizable compound, and a photopolymerization initiator, cured by irradiation with an active ray at a contact pressure of 1 mg/mm² or more and 1000 mg/mm² or less.

In a fourth aspect, the present invention relates to an inkjet image formation device as defined in claim 7. The inkjet image formation device includes:
a discharge head including a nozzle surface provided with a discharge port of a nozzle capable of discharging an inkjet ink containing a wax which reversibly undergoes a phase transition upon temperature change, a photopolymerizable compound, and a photopolymerization initiator, cured by irradiation with an active ray;
a conveyance unit for conveying a recording medium;
an irradiation unit for irradiating an upper surface of the conveyance unit with an active ray from a light source; and
the maintenance device according to the third aspect.

### Advantageous Effects of Invention

The present invention provides, in a wax-containing ink, a maintenance method of a nozzle surface hardly causing discharge bending even when image formation is performed for a long period of time, an image formation method including such a maintenance method, a maintenance device capable of performing such a maintenance method, and an image formation device including such a maintenance device.

### Brief Description of Drawings

Fig. 1 is a side view illustrating a structure of a maintenance device according to an embodiment of the present invention.
Fig. 2 is a side view illustrating a structure of an image formation device according to an embodiment of the present invention.
Fig. 3 is a top view illustrating a structure of an image formation device according to an embodiment of the present invention.

### Description of Embodiments

Due to studies of the present inventors, it has been found that, in a case where image formation with a wax-containing ink is performed for a long period of time, there is a possibility that occurrence of discharge bending cannot be sufficiently suppressed even if maintenance of a nozzle surface is performed by a conventional method. The present inventors consider a reason why this phenomenon occurs as follows. That is, when an image is formed with a wax-containing ink, the temperature of the ink adhering to a substrate is lowered, and a wax in the adhering ink undergoes a phase transition and crystallization to become solid. Similarly, when an ink absorber comes close to or is brought into contact with an ink adhering to a nozzle surface during maintenance, the temperature is lowered and a wax in the adhering ink undergoes a phase transition and crystallization to become solid. Furthermore, a liquid component of an adhering ink is easily absorbed by an ink absorber, but a solid wax is hardly absorbed. Therefore, even if maintenance of a nozzle surface is performed, a solid component derived from a wax tends to remain on the nozzle surface. In particular, when an ink absorber is brought into contact with a nozzle surface, the temperature of a wax is lowered by the ink absorber, and the wax is more likely to be solidified. Furthermore, when the solidified wax is pressed against a nozzle by the ink absorber, the wax more firmly adheres to the nozzle surface. In particular, it is considered that when image formation is performed for a long period of time and the number of times of ink discharge increases, a wax adhering to a nozzle surface is accumulated and discharge bending is more likely to occur.

With respect to this problem, for example, a method for making the temperature of the ink absorber higher than the phase transition temperature of the wax is considered. According to this method, the temperature is not lowered when the ink absorber is brought into contact, and the wax undergoes a phase transition due to heat of the ink absorber to become liquid. Therefore, it is considered that the wax can be more easily absorbed. However, according to knowledge obtained by the present inventor, this method cannot sufficiently suppress discharge bending. In addition, it is difficult to keep the temperature of an ink absorber uniform, and a higher temperature portion and a lower temperature portion are easily generated in the heated ink absorber. Among these portions, when a higher temperature portion is brought into contact with a nozzle, an ink in the nozzle is excessively absorbed, a meniscus caused by the ink in the nozzle collapses, subsequent discharge is not normally performed, and discharge bending thereby occurs. In addition, when the phase transition temperature of a wax contained in an ink is high, the temperature of an ink absorber also needs to be kept higher than the phase transition temperature, and high heat resistance is required for the ink absorber. Therefore, it is difficult to select a material of the ink absorber.

The present invention has been achieved by finding the above knowledge that discharge bending due to adhesion of a wax is more likely to occur when image formation with a wax-containing ink is performed for a long period of time and finding that it is possible to make discharge bending less likely to occur by moving an ink absorber while the ink absorber is in contact with a nozzle surface and thereby removing a wax adhering to the nozzle surface. The present inventors have further found moving conditions capable of suppressing discharge bending due to a wax by sufficiently removing the adhering wax, and also suppressing discharge bending due to reduction in water repellency of a nozzle by making scratches hardly generated on a nozzle, and have thereby completed the present invention.

### 1. Maintenance method of nozzle surface

### 1-1. Contact pressure and speed of ink absorber

A maintenance method of a nozzle surface according to the present invention is a maintenance method of a nozzle surface for discharging a wax-containing ink, and includes a step of moving an ink absorber at a speed of 10 mm/s or more and 1000 mm/s or less while the ink absorber is in contact with the nozzle surface at a contact pressure of 1 mg/mm² or more and 1000 mg/mm² or less.

By moving the ink absorber while the ink absorber is in contact with the nozzle surface, the wax adhering to the nozzle surface is sheared by the ink absorber, a crystal structure formed by the adhering wax is broken, and the viscosity of the ink adhering to the vicinity of the nozzle surface can be lowered. In the ink having a lower viscosity, the wax is mixed with a liquid component of the ink and does not adhere to the nozzle surface. Therefore, the wax can be absorbed by the ink absorber together with the liquid component, and can be removed from the nozzle surface. In addition, by moving the ink absorber, re-adhesion of the wax in the ink absorbed by the ink absorber to the nozzle surface, caused by the wax being pressed against the nozzle again, can be less likely to occur.

The movement of the ink absorber means moving the ink absorber such that two or more different portions on the same surface of the ink absorber are in contact with an arbitrary portion on the nozzle surface. As long as such movement occurs, the position of the entire ink absorber may be changed, or the ink absorber held by two or more rollers may be rotated.

The contact pressure of the ink absorber is set to 1 mg/mm² or more from a viewpoint of breaking a crystal structure of the wax to sufficiently lower the viscosity of the ink when the ink absorber is moved at the above speed. In addition, the contact pressure of the ink absorber is set to 1000 mg/mm² or less from a viewpoint of suppressing generation of scratches on the nozzle surface. The contact pressure of the ink absorber is preferably 50 mg/mm² or more and 1000 mg/mm² or less, and more preferably 50 mg/mm² or more and 300 mg/mm² or less from a viewpoint of sufficiently removing the wax to make discharge bending less likely to occur. In addition, the contact pressure of the ink absorber is preferably 1 mg/mm² or more and 550 mg/mm² or less from a viewpoint of further reducing generation of scratches on the nozzle surface.

The moving speed of the ink absorber is set to 10 mm/s or more from a viewpoint of breaking a crystal structure of the wax to sufficiently lower the viscosity of the ink when the ink absorber is in contact with the nozzle surface at the above contact pressure. In addition, the moving speed of the ink absorber is set to 1000 mm/s or less from a viewpoint of suppressing discharge bending due to collapse of a meniscus. The speed of the ink absorber is preferably 10 mm/s or more and 1000 mm/s or less, more preferably 20 mm/s or more and 550 mm/s or less, and still more preferably 30 mm/s or more and 300 mm/s or less from a viewpoint of sufficiently removing the wax to make discharge bending less likely to occur.

The above contact pressure and speed are particularly suitable for maintenance of the nozzle surface when image formation is performed with a wax-containing ink. For example, when printing on 2000 sheets of a recording medium is performed a plurality of times, a wax tends to adhere to the nozzle surface and discharge bending is likely to occur. However, when the ink absorber is moved at the above contact pressure and speed, a removal efficiency of the adhering wax is also increased.

When maintenance of the nozzle surface at the time of performing image formation with an ink containing no wax is performed at the above contact pressure and speed, the nozzle is easily scratched, and discharge bending due to reduction in water repellency of the nozzle easily occurs.

The temperature of the ink absorber in the movement step is preferably lower than the temperature at which the inkjet ink undergoes a phase transition from a viewpoint of discharge stability of the ink. The phase transition temperature of an ink can be a temperature at which the viscosity of the ink which has become sol or liquid is rapidly increased while the ink is cooed with the viscosity measured using a viscoelasticity measuring device (for example, MCR 300, manufactured by Physica Co.).

### 1-2. Ink absorber

The ink absorber may be a woven fabric or a nonwoven fabric capable of absorbing an ink.

The ink absorber preferably mainly contains high density fibers from a viewpoint of enhancing ink absorbency and suppressing generation of scratches on a nozzle surface. Examples of the high density fibers include polyester, acrylic, nylon, and polypropylene. Any one of these materials may be contained in the ink absorber, or a plurality of these materials may be combined and contained in the ink absorber. A surface of the ink absorber in contact with a nozzle surface preferably contains these materials from a viewpoint of further reducing generation of scratches on the nozzle surface. The high density fibers are preferably formed mainly from fibers having a fineness of 0.5 denier or less, more preferably from fibers having a fineness of about 0.1 denier from the above viewpoint.

Examples of the ink absorber mainly containing high density fibers include clean room wiping clothes, Savina Minimax and Krausen manufactured by KB Seiren, Ltd. ("Savina" and "Krausen" are registered trademarks of KB Seiren, Ltd.).

In addition, the ink absorber is preferably a continuous fine pore sponge made of polyolefin from a viewpoint of further enhancing ink absorbency. Examples of the continuous fine pore sponge made of polyolefin include a technoporous wiping material and a techno porous roller manufactured by Fushimi Pharmaceutical Co., Ltd.

The size of the ink absorber can be appropriately set within such a range that the surface to be subjected to the maintenance method of the present invention is wider than at least one nozzle surface and does not hinder movement of other members in an image formation device. In a case where the maintenance method of the present invention is performed on an discharge head including a plurality of nozzles, the surface to be subjected to the maintenance method of the present invention preferably has a surface area capable of performing maintenance on the plurality of nozzles by one movement.

Movement of the ink absorber may be performed in one direction or back and forth. However, movement is preferably performed only once in one direction from a viewpoint of preventing generation of scratches on a nozzle surface due to excessive friction. The ink absorber is preferably moved a plurality of times from a viewpoint of further enhancing ink absorbability.

### 1-3. Discharge head

The discharge head including a nozzle may be either an on-demand type discharge head or a continuous type discharge head. Examples of the on-demand type discharge head include an electromechanical conversion type including a single cavity type, a double cavity type, a bender type, a piston type, a share mode type, and a shared wall type, and an electrothermal conversion type including a thermal ink jet type and a bubble jet (bubble jet is a registered trademark of Canon Inc.) type.

A nozzle surface is preferably subjected to a water repellent treatment from a viewpoint of making discharge bending due to ink adhesion less likely to occur. Examples of water repellent processing include a fluorine processing treatment with a fluorinated ethylene propylene resin (FEP) and the like, eutectoid plating with water repellent fluorine-containing polymer resin particles such as nickel ions and polytetrafluoroethylene, coating with a fluorine-containing copolymer such as polytetrafluoroethylene (PTFE) or a tetrafluoroethylene-hexafluoropropylene copolymer (FEP) or a silicone resin (described in JP 52-24821 A, JP 56-2862 A, or JP 57-72866 A), a water repellent treatment with a reactive silane compound (JP 56-89569 A), formation of a polymer-containing film having a fluorine-containing heterocyclic structure (JP 4-211959 A), and application of a graft copolymer obtained by copolymerizing a fluororesin having a radically polymerizable unsaturated bond via a urethane bond, a single-end radically polymerizable polysiloxane, and a radically polymerizable monomer, and a coating material containing a curing agent (JP 2002-225274 A).

A nozzle surface which has been subjected to such water repellent processing is more likely to generate scratches when an ink absorber is moved while being in contact with the nozzle surface. Therefore, conventionally, the nozzle surface has been subjected to maintenance while the ink absorber is in contact with the nozzle surface without moving the ink absorber. However, in a case where image formation with a wax-containing ink is performed, an adhering wax is not sufficiently removed in some cases by such a maintenance method. However, according to the maintenance method of a nozzle surface according to the present invention, even when maintenance is performed on a nozzle which has been subjected to such water repellent processing, an adhering wax can be sufficiently removed, and scratches are hardly generated on the nozzle.

A contact angle between an inkjet ink and a nozzle surface is preferably 60° or more from a viewpoint of making discharge bending due to adhesion of an ink less likely to occur.

The contact angle can be a contact angle measured one second after one droplet (droplet amount 3 µL) of an ink is dropwise added to a material constituting a nozzle surface (a surface of a nozzle after a water repellent treatment when the nozzle surface has been subjected to the water repellent treatment). For measurement of the contact angle, DM-500 manufactured by Kyowa Interface Science Co., Ltd. can be used.

The contact angle can be set within the above range by controlling surface energy by adjusting the kind or the film thickness of a binder applied onto a nozzle plate.

### 2. Image formation method

The above maintenance method of a nozzle surface can be performed by incorporating the maintenance method into a known image formation method with an active ray curable inkjet ink containing a wax, a photopolymerizable compound, and a photopolymerization initiator. For example, the above known image formation method includes (1) a step (first step) of discharging droplets of an inkjet ink containing a wax which reversibly undergoes a phase transition upon temperature change, a photopolymerizable compound, and a photopolymerization initiator, cured by irradiation with an active ray from a discharge port of a nozzle provided on a nozzle surface of a discharge head to cause the droplets to land on a recording medium, and (2) a step (second step) of irradiating the droplets of the inkjet ink which have landed with an active ray to cure the droplets. The image formation method according to the present invention further includes (3) a step (third step) of performing maintenance of the nozzle surface of the discharge head in which the above known image formation method.

Even when the above maintenance method of a nozzle surface is performed while being incorporated into a known image formation method with a wax-containing inkjet ink other than an active ray curable ink, similarly to the present invention, by sufficiently removing an adhering wax, the maintenance method can suppress discharge bending due to the wax, can make scratches hardly generated on a nozzle, and can suppress discharge bending due to reduction in water repellency of the nozzle. At this time, the image formation method according to the present invention can be performed similarly except that the second step is excluded.

### 2-1. First step

In this step, droplets of an inkjet ink are discharged from a discharge port of a nozzle provided in a discharge head to cause the droplets to land on a recording medium. The droplets of the inkjet ink are preferably caused to land at positions corresponding to an image to be formed on the recording medium.

Discharge stability can be enhanced by discharging the droplets of the inkjet ink from the discharge head while the inkjet ink is heated. The temperature of the inkjet ink during discharge is preferably from 35°C or higher and 100°C or lower, and more preferably 35°C or higher and 80°C or lower from a viewpoint of further enhancing discharge stability. Emitting is preferably performed at such an ink temperature that the viscosity of the inkjet ink is 7 mPa·s or more and 15 mPa·s or less, and more preferably 8 mPa·s or more and 13 mPa·s or less from a viewpoint of further improving the discharge stability.

Examples of a method for heating the inkjet ink to a predetermined temperature include a method for heating at least one of an ink supply system such as an ink tank constituting a head carriage, a supply pipe, or a front chamber ink tank just before a head, piping with a filter, a discharge head, and the like with a panel heater, a ribbon heater, or a heat-retaining water to a predetermined temperature.

The droplet amount of the inkjet ink during discharge is preferably 2 pL or more and 20 pL or less from a viewpoint of increasing a recording speed and enhancing an image quality.

### 2-2. Second step

In this step, an ink is cured by irradiating the droplets of the ink which have landed with an active ray after the above first step. This makes it possible to form an image having high adhesiveness, for example, even in a recording medium having low water absorbency. Irradiation with an active ray is preferably performed 0.001 seconds or more and 1.0 second or less after landing of the ink from a viewpoint of enhancing curability of the inkjet ink, and is more preferably performed 0.001 seconds or more and 0.5 seconds or less after landing of the ink from a viewpoint of forming a higher definition image.

Examples of the active ray with which the inkjet ink can be irradiated include an electron beam, an ultraviolet ray, an α ray, a γ ray, and an X-ray. Among these rays, irradiation with an ultraviolet ray is preferable from a viewpoint of easy handling and a less influence on human bodies. A light source is preferably a light emitting diode (LED) from a viewpoint of suppressing occurrence of curing failure of an ink due to melting of an inkjet ink due to radiant heat of the light source. Examples of an LED light source capable of emitting an active ray for curing an inkjet ink include a 395 nm water-cooled LED manufactured by Phoseon Technology.

### 2-3. Third step

In this step, maintenance of a nozzle surface of a discharge head is performed by the above maintenance method of the present invention. This step may be performed every time the first step or a combination of the first step and the second step is performed once. This step may be performed after the first step or a combination of the first step and the second step is performed a plurality of times in a range in which discharge bending due to a wax adhering to a nozzle does not occur from a viewpoint of further enhancing a speed of image formation and further reducing cost of image formation. This step is preferably performed once after a combination of the first step and the second step is performed for five hours, preferably for two hours, more preferably for one hour.

### 2-4. Inkjet ink

The inkjet ink is an active ray curable ink containing a wax, a photopolymerizable compound, and a photopolymerization initiator, cured by irradiation with an active ray. The inkjet ink may be an aqueous ink containing an aqueous solvent and a wax, but is preferably an active ray curable ink with a small evaporation amount of a solvent on a nozzle surface from a viewpoint of discharge stability. The ink with a small evaporation amount of a solvent makes a wax less likely to adhere to the vicinity of a nozzle surface, and therefore can more efficiently suppress discharge bending by the maintenance method of the present invention.

### 2-4-1. Wax

A wax can convert droplets of an ink which have landed on a recording medium into a gel state, and can temporarily fix (pin) the ink droplets. When the ink is pinned in a gel state, wet spreading of the ink is suppressed and adjacent dots are less likely to coincide with each other, and therefore a higher definition image can be formed. Only one kind or two or more kinds of the waxes may be contained in the inkjet ink.

The content of the wax is preferably 1.0% by mass or more and 5.0% by mass or less with respect to the total mass of the ink. By setting the content of the wax to 1.0% by mass or more, wet spreading of the ink droplets on a recording medium can be controlled to about the same extent as each other, and a difference in gloss in an image can be less likely to occur. By setting the content of the wax to 5.0% by mass or less, excessive adhesion of the wax to a nozzle surface can be prevented, and occurrence of discharge bending can be suppressed.

Furthermore, by setting the content of the wax to 5.0% by mass or less, the wax is hardly precipitated on a surface of a formed image, and a difference in gloss in the image can be less likely to occur. In addition, strength of a cured film is enhanced, and scratch resistance can be enhanced. The content of the wax in the inkjet ink is more preferably 2.5% by mass or more and 5.0% by mass or less, and still more preferably 2.5% by mass or more and 4.0% by mass or less from the above viewpoint.

The wax preferably substantially contains no photopolymerizable functional group. The phrase "substantially contains no photopolymerizable functional group" means that the amount of photopolymerizable functional groups per mole of the wax is 0.1 mol equivalent or less. It is considered that, by substantially containing no photopolymerizable functional group included in the wax, polymerization of a photopolymerizable compound and inhibition of crosslinking by the above functional group included in the wax are hardly caused and the above crosslinking density can be sufficiently enhanced. In addition, by substantially containing no photopolymerizable functional group included in the wax, occurrence of discharge bending due to crosslinking and adhesion of the wax adhering to a nozzle surface by weak light of an active ray reflected in a device can be suppressed.

When the wax is crystallized in the ink, a structure in which a photopolymerizable compound is encapsulated in a three-dimensional space formed by the wax crystallized in a plate shape may be formed (this structure is hereinafter referred to as a "card house structure"). When the card house structure is formed, a liquid photopolymerizable compound is held in the space. Therefore, ink droplets are less likely to cause wet spreading, and a pinning property of the ink is further enhanced. When the pinning property of the ink is enhanced, the ink droplets which have landed on a recording medium are less likely to gather with each other, and a higher definition image can be formed.

In order to form the card house structure, the photopolymerizable compound dissolved in the ink is preferably compatible with the wax. Meanwhile, when the photopolymerizable compound dissolved in the ink is phase-separated from the wax, it may be difficult to form the card house structure.

Examples of a wax suitable for forming the card house structure by crystallization include a ketone wax, an ester wax, a petroleum wax, a vegetable wax, an animal wax, a mineral wax, a hydrogenated castor oil, a modified wax, a higher fatty acid, a higher alcohol, hydroxystearic acid, a fatty acid amide including an N-substituted fatty acid amide and a special fatty acid amide, a higher amine, an ester of a sucrose fatty acid, a synthetic wax, dibenzylidene sorbitol, a dimer acid, and a dimer diol.

Examples of the above ketone wax include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone.

Examples of the ester wax include behenyl behenate, eicosyl eicosanate, stearyl stearate, palmityl stearate, cetyl palmitate, myristyl myristate, cetyl myristate, myricyl serotinate, stearyl stearate, oleyl palmitate, a glycerin fatty acid ester, a sorbitan fatty acid ester, a propylene glycol fatty acid ester, an ethylene glycol fatty acid ester, and a polyoxyethylene fatty acid ester.

Examples of a commercially available product of the above ester wax include EMALEX series manufactured by Nippon Emulsion Co., Ltd. ("EMALEX" is a registered trademark of Nippon Emulsion Co., Ltd.), and Liquemar series and Poem series manufactured by Riken Vitamin Co., Ltd. ("Rikemar" and "Poem" are registered trademarks of Riken Vitamin Co., Ltd.).

Examples of the petroleum wax include a paraffin wax, a microcrystalline wax, and a petroleum wax containing petrolatum.

Examples of the vegetable wax include a candelilla wax, a carnauba wax, a rice wax, a wood wax, a jojoba oil, a jojoba solid wax, and a jojoba ester.

Examples of the animal wax include beeswax, lanolin, and spermaceti.

Examples of the mineral wax include a montan wax and a hydrogenated wax.

Examples of the modified wax include a montan wax derivative, a paraffin wax derivative, a microcrystalline wax derivative, a 12-hydroxystearic acid derivative, and a polyethylene wax derivative.

Examples of the higher fatty acid include behenic acid, arachidic acid, stearic acid, palmitic acid, myristic acid, lauric acid, oleic acid, and erucic acid.

Examples of the higher alcohol include stearyl alcohol and behenyl alcohol.

Examples of the hydroxystearic acid include 12-hydroxystearic acid.

Examples of the fatty acid amide include lauric acid amide, stearic acid amide, behenic acid amide, oleic acid amide, erucic acid amide, ricinoleic acid amide, and 12-hydroxystearic acid amide.

Examples of a commercially available product of the fatty acid amide include Nikka Amide series manufactured by Nippon Kasei Chemical Co., Ltd. ("Nikka Amide" is a registered trademark of Nippon Kasei Chemical Co., Ltd.), ITOWAX series manufactured by Itoh Oil Chemicals Co. Ltd., and FATTYAMID series manufactured by Kao Corporation.

Examples of the N-substituted fatty acid amide include N-stearyl stearic acid amide and N-oleyl palmitic acid amide.

Examples of the special fatty acid amide include N,N'-ethylenebisstearylamide, N,N'-ethylenebis-12-hydroxystearylamide, and N,N'-xylylenebisstearylamide.

Examples of the higher amine include dodecylamine, tetradecylamine, and octadecylamine.

Examples of the sucrose fatty acid ester include sucrose stearate and sucrose palmitate.

Examples of a commercially available product of the sucrose fatty acid ester include Ryoto sugar ester series manufactured by Mitsubishi Chemical Foods Co., Ltd. ("Ryoto" is a registered trademark of Mitsubishi Chemical Foods Co., Ltd.).

Examples of the synthetic wax include a polyethylene wax and an α-olefin maleic anhydride copolymer wax.

Examples of a commercially available product of the synthetic wax include the UNILIN series manufactured by Baker-Petrolite Corporation ("UNILIN" is a registered trademark of Baker-Petrolite Corporation).

Examples of the dibenzylidene sorbitol include 1,3: 2,4-bis-O-benzylidene-D-glucitol.

Examples of a commercially available product of the dibenzylidene sorbitol include Gelol D manufactured by New Japan Chemical Co., Ltd. ("Gelol" is a registered trademark of New Japan Chemical Co., Ltd.).

Examples of a commercially available product of the dimer diol include PRIPOR series manufactured by CRODA International Plc ("PRIPOR" is a registered trademark of CRODA International Plc).

Among these waxes, a ketone wax, an ester wax, a higher fatty acid, a higher alcohol, and a fatty acid amide are preferable from a viewpoint of further enhancing a pinning property. A ketone wax represented by the following general formula (G1) and an ester wax represented by the following general formula (G2) are more preferable from the above viewpoint. Only one kind or two or more kinds of the ketone wax represented by the following general formula (G1) and the ester wax represented by the following general formula (G2) may be contained in an inkjet ink. Only either one of the ketone wax represented by the following general formula (G1) and the ester wax represented by the following general formula (G2) or both thereof may be contained in an inkjet ink.

### General formula (G1): R1-CO-R2

In general formula (G1), R1 and R2 each represent a linear or branched hydrocarbon group having 9 or more and 25 or less carbon atoms.

### General formula (G2): R3-COO-R4

In general formula (G2), R3 and R4 each represent a linear or branched hydrocarbon group having 9 or more and 25 or less carbon atoms.

In the ketone wax represented by the above general formula (G1) or the ester wax represented by the above general formula (G2), the carbon number of a linear or branched hydrocarbon group is 9 or more, and therefore crystallinity of the wax is further enhanced, and a more sufficient space is generated in the card house structure. Therefore, the photopolymerizable compound is easily encapsulated sufficiently in the space, and the pinning property of the ink is further enhanced. In addition, the carbon number of a linear or branched hydrocarbon group is 25 or less, therefore the melting point of the wax is not excessively raised, and therefore it is not necessary to excessively heat an ink when the ink is emitted. R1 and R2 each particularly preferably represent a linear hydrocarbon group having 11 or more and less than 23 carbon atoms from the above viewpoint.

Either R1 or R2, or either R3 or R4 preferably represents a saturated hydrocarbon group having 11 or more and less than 23 carbon atoms from a viewpoint of raising the phase transition temperature of the ink and making the ink gel rapidly after landing. Both R1 and R2, or both R3 and R4 more preferably represent saturated hydrocarbon groups each having 11 or more and less than 23 carbon atoms from the above viewpoint.

Examples of the ketone wax represented by the above general formula (G1) include dilignoceryl ketone (carbon number: 23-24), dibehenyl ketone (carbon number: 21-22), distearyl ketone (carbon number: 17 -18), dieicosyl ketone (carbon number: 19-20), dipalmityl ketone (carbon number: 15-16), dimyristyl ketone (carbon number: 13-14), dilauryl ketone (carbon number: 11-12), lauryl myristyl ketone (carbon number: 11-14), lauryl palmityl ketone (11-16), myristyl palmityl ketone (13-16), myristyl stearyl ketone (13-18), myristyl behenyl ketone (13-22), palmityl stearyl ketone (15-18), palmityl behenyl ketone (15-22), and stearyl behenyl ketone (17-22). Note that the carbon numbers in the parenthesis represent the carbon numbers of two hydrocarbon groups divided by a carbonyl group.

Examples of a commercially available product of the ketone wax represented by general formula (G1) include 18-Pentatriacontanon manufactured by Alfa Aeser, Hentriacontan-16-on manufactured by Alfa Aeser, and Kaowax T1 manufactured by Kao Corporation.

Examples of the fatty acid or the ester wax represented by general formula (G2) include behenyl behenate (carbon number: 21-22), eicosyl eicosanate (carbon number: 19-20), stearyl stearate (carbon number: 17-18), palmityl stearate (carbon number: 17-16), lauryl stearate (carbon number: 17-12), cetyl palmitate (carbon number: 15-16), stearyl palmitate (carbon number: 15-18), myristyl myristate (carbon number: 13-14), cetyl myristate (carbon number: 13-16), octyldodecyl myristate (carbon number: 13-20), stearyl oleate (carbon number: 17-18), stearyl erucate (carbon number: 21-18), stearyl linoleate (carbon number: 17-18), behenyl oleate (carbon number: 18-22), and arachidyl linoleate (carbon number: 17-20. Note that the carbon numbers in the parenthesis represent the carbon numbers of two hydrocarbon groups divided by an ester group.

Examples of a commercially available product of the ester wax represented by general formula (G2) include Unister M-2222SL, Spermaceti, Nissan Elektor WEP 3, and Nissan Elektor WEP 2 manufactured by NOF CORPORATION ("UNISTOR" and "NISSAN ELECTOL" are registered trademarks of NOF CORPORATION), EXCEPARL SS and EXCERPY MY-M manufactured by Kao Corporation ("EXCEPARL" is a registered trademark of Kao Corporation), EMALEX CC-18 and EMALEX CC-10 manufactured by Nihon Emulsion Co., Ltd. ("EMALEX" is a registered trademark of Nihon Emulsion Co., Ltd.), and Amreps PC manufactured by Kokyu Alcohol Kogyo Co., Ltd. ("Amreps" is a registered trademark of Kokyu Alcohol Kogyo Co., Ltd.). These commercially available products are often used as a mixture of two or more kinds thereof, and therefore may be separated and purified as necessary and contained in an ink.

### 2-4-2. Photopolymerizable compound

Examples of the photopolymerizable compound include a radically polymerizable compound and a cationically polymerizable compound. The photopolymerizable compound is crosslinked or polymerized by irradiation with an active ray to cure an inkjet ink. The photopolymerizable compound may be a monomer, a polymerizable oligomer, a prepolymer, or a mixture thereof. Only one kind or two or more kinds of the photopolymerizable compounds may be contained in an inkjet ink.

Examples of the active ray include an ultraviolet ray, an electron beam, an α ray, a γ ray, and an X-ray. The active ray is preferably an ultraviolet ray or an electron beam from viewpoints of safety and being able to cause the polymerization and crosslinking even with a lower energy amount.

The content of the photopolymerizable compound can be, for example, 1% by mass or more and 97% by mass or less with respect to the total mass of an inkjet ink.

The radically polymerizable compound is preferably an unsaturated carboxylate compound, and more preferably a (meth)acrylate. Note that in the present invention, a "(meth)acrylate" means an acrylate or a methacrylate, a "(meth)acryloyl group" means an acryloyl group or a methacryloyl group, and "(meth)acrylic" means acrylic or methacrylic.

Examples of the (meth)acrylate include monofunctional acrylates including isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid, and t-butylcyclohexyl (meth)acrylate; bifunctional acrylates including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A PO adduct di(meth)acrylate, hydroxypivalic acid neopentyl glycol di(meth)acrylate, polytetramethylene glycol di(meth)acrylate, polyethylene glycol diacrylate, and tripropyleneglycol diacrylate; and tri- or higher functional acrylates including trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerol propoxy tri(meth)acrylate, and pentaerythritol ethoxy tetra(meth)acrylate.

The radically polymerizable compound preferably contains a (meth)acrylate modified with ethylene oxide or propylene oxide (hereinafter, also simply referred to as a "modified (meth)acrylate"). The modified (meth)acrylate is more photosensitive. In addition, the modified (meth)acrylate is easily encapsulated by the card house structure when an ink becomes gel at a low temperature, and is more compatible with other ink components at a high temperature. Furthermore, the modified (meth)acrylate is less likely to cause curing shrinkage, and therefore curling of a printed matter during image formation is less likely to occur.

Examples of a commercially available product of a polyfunctional modified (meth)acrylate include CD561, SR454, SR499, and SR494 manufactured by Sartomer, and NK ester A-400, NK ester A-600, NK ester 9G, NK ester 14G, NK ester DOD-N, NK ester A-DCP, and NK ester DCP manufactured by Shin-Nakamura Chemical Co., Ltd.

Examples of the cationically polymerizable compound include an epoxy compound, a vinyl ether compound, and an oxetane compound.

### 2-4-3. Photopolymerization initiator

The photopolymerization initiator can initiate polymerization of a photopolymerizable compound by irradiation with an active ray. The photopolymerization initiator is preferably a radical polymerization initiator, but may further contain a cationic polymerization initiator. The ink in the present invention may contain only one kind of photopolymerization initiator or two or more kinds thereof.

The amount of the photopolymerization initiator can be arbitrarily set within a range in which the ink is sufficiently cured by irradiation with an active ray and a discharge property of the ink is not lowered. For example, the amount can be 0.1% by mass or more and 20% by mass or less, and preferably 1.0% by mass or more and 12% by mass or less with respect to the total mass of the ink.

### 2-4-4. Other components

The ink may further contain other components including a coloring material, a dispersant, a polymerization inhibitor, and a surfactant within a range not lowering a discharge property of the ink. Only one kind or two or more kinds of these components may be contained in the inkjet ink.

The coloring material includes a dye and a pigment. The coloring material is preferably a pigment from a viewpoint of obtaining an image with good weather resistance. The pigment can be selected, for example, from a yellow pigment, a red or magenta pigment, a blue or cyan pigment, and a black pigment according to the color or the like of an image to be formed.

Examples of the dispersant include a hydroxy group-containing carboxylate, a salt of a long chain polyaminoamide and a high molecular weight acid ester, a salt of a high molecular weight polycarboxylic acid, a salt of a long chain polyaminoamide and a polar acid ester, a high molecular weight unsaturated acid ester, a high molecular copolymer, a modified polyurethane, a modified polyacrylate, a polyether ester type anion activator, a naphthalene sulfonic acid formalin condensate salt, an aromatic sulfonic acid formalin condensate salt, a polyoxyethylene alkyl phosphate ester, polyoxyethylene nonyl phenyl ether, and stearyl amine acetate.

The content of the dispersant can be, for example, 20% by mass or more and 70% by mass or less with respect to the total mass of a pigment.

Examples of the polymerization inhibitor include (alkyl) phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene) aniline oxide, dibutyl cresol, cyclohexanone oxime cresol, guaiacol, o-isopropyl phenol, butyral doxime, methylethyl ketoxime, and cyclohexanone oxime.

Examples of the surfactant include an anionic surfactant such as a dialkyl sulfosuccinate, an alkylnaphthalene sulfonate, or a fatty acid salt; a nonionic surfactant such as a polyoxyethylene alkyl ether, a polyoxyethylene alkyl allyl ether, an acetylene glycol, or a polyoxy ethylene-polyoxypropylene block copolymer; a cationic surfactant such as an alkylamine salt or a quaternary ammonium salt; and a silicone or fluorine surfactant.

Examples of a commercially available product of the silicone surfactant include KF-351A, KF-352A, KF-642, and X-22-4272 manufactured by Shin-Etsu Chemical Co., Ltd., BYK 307, BYK 345, BYK 347, and BYK 348, manufactured by BYK Japan KK ("BYK" is a registered trademark of BYK Japan KK), and TSF 4452 manufactured by GE Toshiba Silicones Co., Ltd.

The content of the surfactant is preferably 0.001% by mass or more and less than 1.0% by mass with respect to the total mass of a primer.

### 2-4-5. Physical properties

The viscosity of the inkjet ink at 80°C is preferably 3 mPa·s or more and 20 mPa s or less from a viewpoint of further enhancing an emitting property from a discharge head. In addition, the viscosity of the inkjet ink at 25°C is preferably 1000 mPa·s or more from a viewpoint of sufficiently making the ink gel when the temperature is lowered to room temperature due to landing.

The phase transition temperature of the inkjet ink is preferably 40°C or higher and 70°C or lower. When the phase transition temperature of the ink is 40°C or higher, the ink rapidly becomes gel after landing on a recording medium, and therefore a pinning property is further enhanced. When the phase transition temperature of the ink is 70°C or lower, the ink hardly becomes gel when the inkjet ink is emitted from a discharge head having an ink temperature of usually about 80°C. Therefore, the ink can be emitted more stably.

The viscosity of the inkjet ink at 80°C, and the viscosity and the phase transition temperature thereof at 25°C can be determined by measuring a temperature change of dynamic viscoelasticity of the ink with a rheometer. In the present invention, the viscosity and phase transition temperature are values obtained by the following method. The inkjet ink is heated to 100°C, and the ink is cooled to 20°C under conditions of a shear rate of 11.7 (1/s) and a temperature-lowering rate of 0.1°C/s while the viscosity is measured with a stress control type rheometer Physica MCR 301 (cone plate diameter: 75 mm, cone angle: 1.0°) manufactured by Anton Paar GmbH, and a temperature change curve of viscosity is thereby obtained. The viscosity at 80°C and the viscosity at 25°C are determined by reading the viscosity at 80°C and the viscosity at 25°C in the temperature change curve of viscosity, respectively. The phase transition temperature is determined as a temperature at which the viscosity is 200 mPa·s in the temperature change curve of viscosity.

### 3. Maintenance device

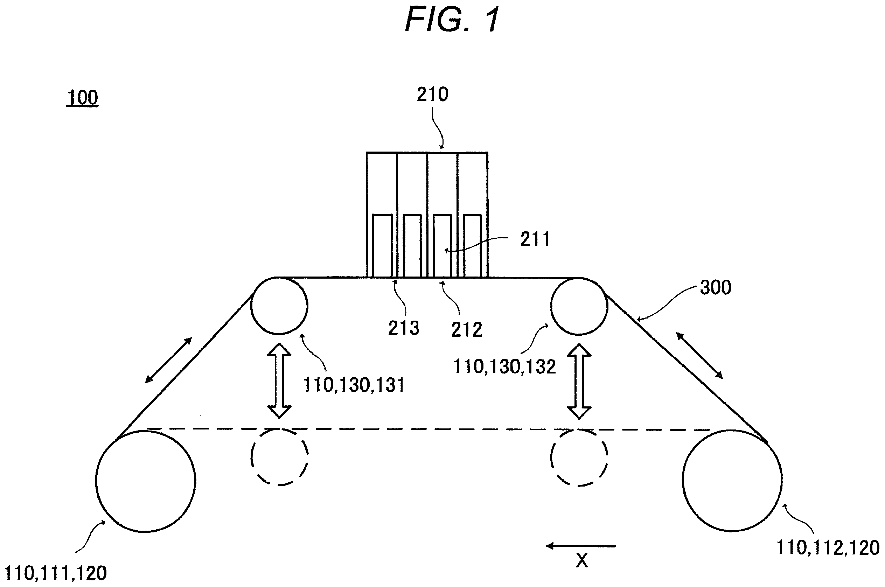

Fig. 1 is a side view illustrating a concept of a maintenance device 100 according to the present invention. The maintenance device 100 performs maintenance of a nozzle surface 213 of a discharge head 210 provided with a discharge port 212 of a nozzle 211 capable of discharging an inkjet ink containing a wax that reversibly undergoes a phase transition upon temperature change according to the above maintenance method. The maintenance device

100 includes an installation unit 110 of an ink absorber 300 and an absorber movement unit 120. The maintenance device 100 may further include a pressing unit 130.

### 3-1. Installation unit 110

The installation unit 110 may have any shape as long as the ink absorber 300 can be installed therein. For example, as illustrated in Fig. 1, the installation unit 110 may include a feeding roller 111 for feeding the ink absorber 300, and a winding roller 112 for winding the ink absorber 300 installed at a predetermined distance from the feeding roller 111. With such a structure, the ink absorber 300 can be installed while being stretched with a predetermined tension between the feeding roller 111 and the winding roller 112, and the contact pressure and the speed can be adjusted easily. At this time, the installation unit 110 may further include a roller for adjusting the position and tension of the ink absorber 300.

In addition, the installation unit 110 may be constituted such that the ink absorber 300 can be attached and detached from a viewpoint of facilitating replacement of the ink absorber 300.

### 3-2. Absorber movement unit 120

The absorber movement unit 120 moves the ink absorber 300 in contact with the nozzle surface 213 at a contact pressure of 1 mg/mm² or more and 1000 mg/mm² or less at an arbitrary speed set within a range of 10 mm/s or more and 1000 mm/s or less while the ink absorber 300 is in contact with the nozzle surface 213 of the discharge head 210 at a pressure within this range. The absorber movement unit 120 and the installation unit 110 may be separately provided. However, one device having both the functions may be used from a viewpoint of simplifying a structure of a device and facilitating control. For example, the ink absorber 300 can be moved by rotating the feeding roller 111 and the winding roller 112 at the above speed.

### 3-3. Pressing unit 130

The pressing unit 130 brings the ink absorber 300 into contact with the discharge head 210 at an arbitrary contact pressure set in a range of 1 mg/mm² or more and 1000 mg/mm² or less. The pressing unit 130 brings the ink absorber 300 into contact with the discharge head 210 at the above contact pressure while the ink absorber 300 moves at the above speed. The pressing unit 130 and the installation unit 110 may be separately provided. However, one device having both the functions may be used from a viewpoint of simplifying a structure of a device and facilitating control. For example, as illustrated in Fig. 1, by moving the roller 131 and the roller 132 included in the installation unit 110, the ink absorber 300 can be moved in a contacting/separating direction (vertical direction) with respect to the nozzle surface 213, and can be in contact therewith at a contact pressure within the above range. Incidentally, as described below, in a case where an image formation device (for example, a head movement unit 251) is constituted so as to bring the ink absorber 300 into contact with the discharge head 210 at a contact pressure of 1 mg/mm² or more and 1000 mg/mm² or less, the pressing unit 130 can be omitted.

With such a structure, maintenance of the nozzle surface 213 of the discharge head 210 is possible by the above maintenance method.

### 4. Image formation device

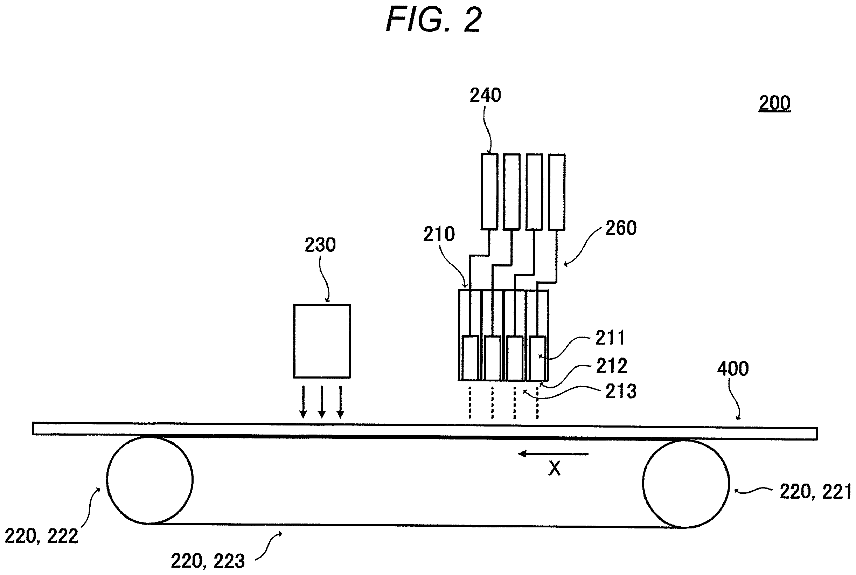

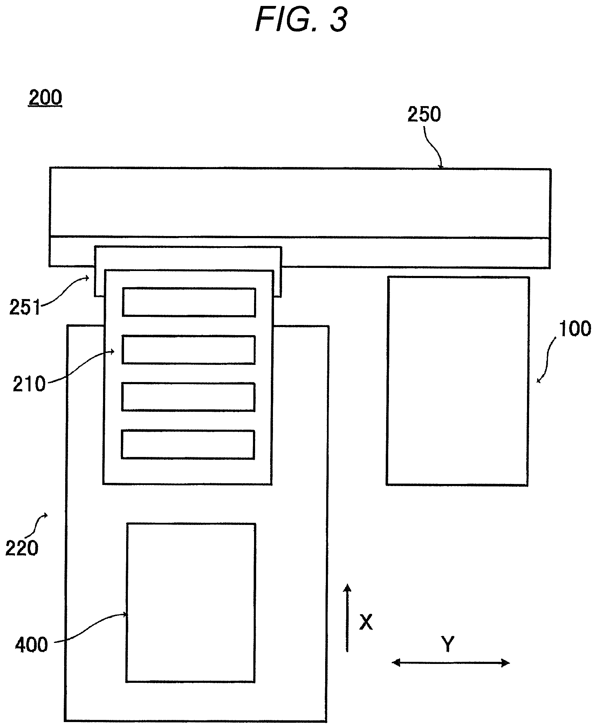

Figs. 2 and 3 are conceptual diagrams of an inkjet image formation device 200 according to the present invention. Fig. 2 is a side view thereof, and Fig. 3 is a top view thereof.

As illustrated in Figs. 2 and 3, the image formation device 200 includes the discharge head 210, the conveyance unit 220, the irradiation unit 230, and the above maintenance device 100. The image formation device 200 may further include an ink tank 240 communicating with the discharge head 210. Incidentally, in a case of a device for forming an image using an ink other than an active ray curable ink, the irradiation unit 230 can be omitted. In the following description, a direction in which a recording medium 400 is conveyed is referred to as a direction X, and a direction in which the discharge head 210 is scanned between a first position for forming an image and a second position for performing maintenance is referred to as a direction Y. The direction X and the direction Y are preferably different from each other from a viewpoint of simplifying a structure of a device and facilitating control. The direction X and the direction Y are preferably perpendicular to each other from a similar viewpoint.

### 4-1. Discharge head 210

The discharge head 210 includes the nozzle surface 213 provided with the discharge port 212 of the nozzle 211 on a surface facing the conveyance unit 220 when an image is formed, and discharges an ink onto the recording medium 400 conveyed by the conveyance unit 220. The discharge head 210 may include a temperature adjustment means for adjusting the temperature of an ink to adjust the ink so as to have a low viscosity from a viewpoint of making a wax sol and enhancing a discharge property. Examples of the temperature adjustment means include heating means using a panel heater, a ribbon heater, and a heat-retaining water.

The discharge head 210 may be a scan type discharge head having a width in a direction perpendicular to the direction X smaller than that of the recording medium 400 or may be a line type discharge head having the width in the direction perpendicular to the direction X larger than that of the recording medium 400.

The discharge head 210 is disposed so as to be movable at least in the direction Y.

As illustrated in Fig. 3, the discharge head 210 is connected to the head movement unit 251 supported by a support frame 250 extending in the direction Y from an upper portion of the conveyance unit 220 to an upper portion of the maintenance device 100, and moving the discharge head 210 in the direction Y. The head movement unit 251 can move the discharge head 210 in a first movement direction connecting the first position for forming an image and the second position for performing maintenance. In Fig. 3, the discharge head 210 is at the first position, but can be moved to the second position above the maintenance device 100 in the vertical direction by the head movement unit 251. Furthermore, the head movement unit 251 may be constituted so as to move the discharge head 210 in the second moving direction (for example, in the vertical direction) for bringing the discharge head 210 into contact with the ink absorber 300 at the second position, or may be constituted so as to bring the ink absorber 300 in contact with the discharge head 210 at a contact pressure of 1 mg/mm² or more and 1000 mg/mm² or less at the second position.

The number of the nozzles 211 may be equal to or more than the number of inks (for example, four) used for image recording. In a case where the discharge head 210 has a plurality of the nozzles 211, the plurality of nozzles 211 is preferably arranged in the direction X with an approximately equal interval from a viewpoint of simplifying a structure of a device and facilitating control.

### 4-2. Conveyance unit 220

During image formation, the conveyance unit 220 conveys the recording medium 400 such that the recording medium 400 facing the discharge head 210 moves in the direction X just below the discharge head 210 in the vertical direction. For example, the conveyance unit 220 includes a driving roller 221, a driven roller 222, and a conveyance belt 223.

The driving roller 221 and the driven roller 222 are disposed with a predetermined interval in the direction X and in a state of extending in a direction perpendicular to the direction X. The driving roller 221 is rotated by a driving source (not illustrated).

The conveyance belt 223 is a belt for conveying the recording medium 400 placed thereon, and is stretched between the driving roller 221 and the driven roller 222. The conveyance belt 223 can be, for example, an endless belt formed so as to be wider than the recording medium 400. At this time, when the driving source rotates the driving roller 221, the conveyance belt 223 goes around the driving roller 221, and the recording medium 400 on the conveyance belt 223 is conveyed in the direction X. A plurality of suction holes (not illustrated) may be formed on a belt surface of the conveyance belt 223 from a viewpoint of making detachment of the recording medium less likely to occur by sucking and holding the recording medium 400.

### 4-3. Irradiation unit 230

The irradiation unit 230 includes a light source, and irradiates an upper surface of the conveyance unit 220 with an active ray from the light source. This makes it possible to irradiate droplets of an inkjet ink which have landed on the recording medium 400 to be conveyed with an active ray to cure the droplets. The irradiation unit 230 can be disposed just above the conveyance unit 220 on a downstream side of the discharge head 210 in the direction X. The light source is preferably a light emitting diode (LED) from a viewpoint of suppressing occurrence of curing failure of an ink due to melting of an inkjet ink due to radiant heat of the light source. Examples of an LED light source capable of emitting an active ray for curing an inkjet ink include a 395 nm water-cooled LED manufactured by Phoseon Technology.

### 4-4. Maintenance device

For example, as illustrated in Fig. 3, the maintenance device 100 can be disposed adjacent to the conveyance unit 220 in the direction Y.

### 4-5. Other Structures

In addition to the above components, the image formation device 200 may include an ink tank 240 for storing an inkjet ink before discharge, an ink flow path 260 for communicating the ink tank 240 with the discharge head 210 so as to make an ink flowable therethrough, a pressure measurement unit for measuring a contact pressure between the ink absorber 300 and the discharge head 210, a speed measurement unit for measuring a moving speed of the ink absorber 300 in contact with the discharge head 210, a temperature measurement unit for measuring the temperature of the ink absorber 300 in contact with the discharge head 210, and a control unit. The control unit may be constituted to control the pressing unit 130 or the head movement unit 251 such that the contact pressure is within the above range when a contact pressure measured by the pressure measurement unit is outside a range of 1 mg/mm² or more and 1000 mg/mm² or less. In addition, the control unit may be constituted to control the absorber movement unit 120 such that the speed is within the above range when a speed measured by the speed measurement unit is outside a range of 1 mg/mm² or more and 1000 mg/mm² or less. In addition, the control unit may be constituted to control the pressing unit 130, the head movement unit 251, or the absorber movement unit 120 so as to perform maintenance with a contact pressure or a speed within the above range after determining that a temperature of the ink absorber 300 measured by the temperature measurement unit is lower than a temperature at which an inkjet ink undergoes a phase transition, measured in advance. Furthermore, the control unit may be constituted to be able to transmit a signal for performing maintenance of a nozzle surface to the maintenance device 100 and the head movement unit 251 every time a predetermined number of times of discharge of ink droplets or a predetermined number of sheets of printing is completed.

### 5. Operation of image formation device and maintenance device

In the first step of the above image formation method, droplets of an inkjet ink are discharged from the discharge port 212 of the nozzle 211 provided on the nozzle surface 213 of the discharge head 210 to cause the droplets to land on the recording medium 400. The droplets of the ink which have landed are cured by irradiation with an active ray from the irradiation unit 230 to form a printed matter. By repeating discharge of the droplets of the inkjet ink and irradiation with an active ray while the recording medium 400 is conveyed in the conveyance direction X by the conveyance unit 220, a predetermined printed matter can be formed.

When a predetermined number of times of discharge of ink droplets or a predetermined number of sheets of printing is completed, the head movement unit 251 moves the discharge head 210 in the direction Y. When the discharge head 210 reaches the second position for performing the maintenance, the head movement unit 251 or the pressing unit 130 brings the ink absorber 300 installed in the installation unit 110 in contact with the discharge head 210 at a contact pressure of 1 mg/mm² or more and 1000 mg/mm² or less. For example, in Fig. 1, by moving the roller 131 and the roller 132 as the pressing unit 130 upward in the vertical direction (direction of the arrow in Fig. 1) from the initial position indicated by the dotted line in Fig. 1, the ink absorber 300 is moved to the contact position indicated by the solid line in Fig. 1, and can be brought into contact with the discharge head 210 at the above contact pressure. The head movement unit 251 may move the discharge head 210 downward in the vertical direction at the second position, and the ink absorber 300 may be thereby brought into contact with the discharge head 210 at the above contact pressure.

When the ink absorber 300 comes into contact with the discharge head 210 at the above contact pressure, the absorber movement unit 120 moves the ink absorber 300 at an arbitrary speed set within a range of 10 mm/s or more and 1000 mm/s or less while the ink absorber 300 is in contact with the discharge head 210 at a pressure within the above range. For example, in Fig. 1, by rotating the feeding roller 111 and the winding roller 112 as the absorber movement unit 120 at the above speed, the ink absorber 300 can be moved. Movement may be performed one or more times.

Thereafter, the absorber movement unit 120 stops the movement of the ink absorber 300, and the head movement unit 251 or the pressing unit 130 brings the ink absorber 300 and the discharge head 210 into a non-contact state. Furthermore, the head movement unit 251 may move the discharge head 210 to the above first position for forming an image.

### Examples

Hereinafter, the present invention will be described in more detail with reference to Examples. The invention is not construed as being limited by these Examples.

### 1. Preparation of ink

An ink was prepared using the following components.

### [Photopolymerizable compound]

A-400: NK Ester A-400, manufactured by Shin-Nakamura Chemical Co., Ltd.
A-600: NK Ester A-600, manufactured by Shin-Nakamura Chemical Co., Ltd.
APG-200: NK Ester APG-200, manufactured by Shin-Nakamura Chemical Co., Ltd.
SR 499: SR 499, manufactured by Sartomer
SR 494: SR 494, manufactured by Sartomer

### [Wax]

18-P: 18-Pentatriacontanon, manufactured by Alfa Aeser Co.
EXCEPARL SS: EXCEPARL SS, manufactured by Kao Corporation ("EXCEPARL" is a registered trademark of Kao Corporation)

### [Surfactant]

KF 352: KF 352, manufactured by Shin-Etsu Chemical Co., Ltd.

### [Photopolymerization Initiator]

TPO: DAROCUR TPO ("DAROCUR" is a registered trademark)
369: IRGACURE 369 ("IRGACURE" is a registered trademark)
ITX: SPEEDCURE ITX ("SPEEDCURE" is a registered trademark)

### [Polymerization Inhibitor]

UV 10: IRGASTAB UV 10, manufactured by BASF ("IRGASTAB" is a registered trademark of BASF)

### [Dispersant]

PB 824: Ajisper PB 824, manufactured by Ajinomoto Fine-Techno Co., Ltd. ("Ajisper" is a registered trademark of Ajinomoto Co., Inc.)

### [Pigment]

PB15: 4: Chromofine Blue 6332 JC, manufactured by Dainichiseika Color & Chemicals Mfg. Co., Ltd. ("Cromofine" is a registered trademark of Dainichiseika Color & Chemicals Mfg. Co., Ltd.)

### 1-1. Preparation of pigment dispersion

The following two compounds were put in a stainless steel beaker. These compounds were heated and stirred for one hour while being heated on a hot plate at 65°C, and the dispersant was dissolved.

Dispersant: PB824 9 parts by mass
Photopolymerizable compound: APG-200 71 parts by mass
The obtained solution was cooled to room temperature. Thereafter, 20 parts by mass of the following pigment was added thereto. The resulting mixture was put in a glass bottle together with 200 g of zirconia beads having a diameter of 0.5 mm, and the glass bottle was sealed. The resulting mixture was dispersed for five hours with a paint shaker and the zirconia beads were removed to obtain a pigment dispersion.
Pigment 1: PB 15: 4 20 parts by mass

### 1-2. Preparation of ink

The following components were added to the above pigment dispersion at the following ratios. The resulting mixture was stirred at 80°C to obtain an ink solution. The ink solution was filtered through a Teflon (registered trademark) 3 µm membrane filter manufactured by ADVATEC Corp. to obtain ink C.
Pigment dispersion: 12.5 parts by mass
Photopolymerizable compound: A-400 12.0 parts by mass
Photopolymerizable compound: A-600 8.0 parts by mass
Photopolymerizable compound: APG-200 10.0 parts by mass
Photopolymerizable compound: SP 499 26.3 parts by mass
Photopolymerizable compound: SP494 20.0 parts by mass
Wax: 18-P 3.0 parts by mass
Surfactant: KF 352 0.05 parts by mass
Photopolymerization initiator: TPO 4.0 parts by mass
Photopolymerization initiator: 369 2.0 parts by mass
Photopolymerization initiator: ITX 2.0 parts by mass
Polymerization inhibitor: UV 10 0.2 parts by mass

Inks A, B, D, E, and F were obtained in a similar manner to ink C except that the above components and ratios were changed as listed in Table 1.

### 1-3. Measurement of phase transition temperature

Inks A to F were heated to 100°C, and the inks were cooled to 20°C under conditions of a shear rate of 11.7 (1/s) and a temperature-lowering rate of 0.1°C/s while the viscosity was measured with a stress control type rheometer Physica MCR 301 (cone plate diameter: 75 mm, cone angle: 1.0°) manufactured by Anton Paar GmbH, and a temperature change curve of viscosity was thereby obtained. In the temperature change curve of viscosity, a temperature at which the viscosity was 200 mPa·s was taken as a phase transition temperature.

In Table 1, a numerical value of each component described in a column of each component indicates the amount (unit: parts by mass) occupied by each component in each ink, and the phase transition temperature is a phase transition temperature of each ink measured under the above conditions. Ink A contained no wax, and therefore did not undergo a phase transition.

### [Table 1]

**Table 1: Inks A to F**

| Ink number | | A | B | C | D | E | F |
|---|---|---|---|---|---|---|---|
| Pigment dispersant | | 12.5 | 12.5 | 12.5 | 12.5 | 12.5 | 12.5 |
| Photopolymerizable compound | A-400 | 12.0 | 12.0 | 12.0 | 12.0 | 12.0 | 12.0 |
| | A-600 | 8.0 | 8.0 | 8.0 | 8.0 | 8.0 | 8.0 |
| | APG-200 | 10.0 | 10.0 | 10.0 | 10.0 | 10.0 | 10.0 |
| | SR499 | 29.3 | 28.1 | 26.3 | 24.3 | 22.3 | 26.3 |
| | SR494 | 20.0 | 20.0 | 20.0 | 20.0 | 20.0 | 20.0 |
| Wax | 18-P | - | 0.8 | 3.0 | 3.0 | 3.0 | - |
| | EXCEPARL SS | - | - | - | 2.0 | 4.0 | 3.0 |
| Surfactant | KF352 | 0.05 | 0.05 | 0.05 | 0.05 | 0.05 | 0.05 |
| Photopolymerization initiator | TPO | 4.0 | 4.0 | 4.0 | 4.0 | 4.0 | 4.0 |
| | 369 | 2.0 | 2.0 | 2.0 | 2.0 | 2.0 | 2.0 |
| | ITX | 2.0 | 2.0 | 2.0 | 2.0 | 2.0 | 2.0 |
| Polymerization inhibitor | UV10 | 0.2 | 0.2 | 0.2 | 0.2 | 0.2 | 0.2 |
| Phase transition temperature (°C) | | - | 56 | 60 | 62 | 63 56 | |

### 2. Formation of printed matter, maintenance, and evaluation

Formation of a printed matter and maintenance of a nozzle surface were performed under different conditions, and a situation of generation of white spots in a printed matter formed with any one of the above inks A to F and the degree of scratches on the nozzle surface were evaluated.

Note that any one of the four types of ink absorbers listed in Table 2 was used as an ink absorber. Note that the column of "material" describes a material contained in each ink absorber among polyester, nylon, and polypropylene in a case where each ink absorber contained any one of polyester, nylon, and polypropylene. In a case where an ink absorber contained none of polyester, nylon, and polypropylene but is made of another material, the column of "material" describes "another material".

### [Table 2]

**Table 2: Ink absorbers A to D**

| Abbreviation | Product name | Manufacturer | Material |
|---|---|---|---|
| A | W0754 | KB Seiren, Ltd. | Polyester/ nylon |
| B | Savina MX | KB Seiren, Ltd. | Polyester/ nylon |
| C | Savina DC | KB Seiren, Ltd. | Polyester |
| D | Palcloth | Oji Kinocloth Co., Ltd. | Rayon |

### 2-1. Generation of white spots

Ink C was put in an ink tank of an inkjet image formation device provided with KM 1800i manufactured by Konica Minolta Co. (number of nozzles: 1776). Ink C was discharged onto a section of 2 cm × 2 cm set on coated paper (mirror coated platinum manufactured by Oji Paper Co., Ltd.) under an environment of 23°C and 55%RH such that the ink attachment amount was 9 g/m², and ink C was irradiated with an ultraviolet ray having a wavelength of 395 nm with an LED (manufactured by Kyocera Corporation) to form a solid image. Irradiation conditions of an ultraviolet ray were an irradiation width: 68 mm, an irradiation distance: 70 mm, and illuminance on a recording medium: 2.50 W/cm². The temperature of a substrate surface at the time of discharge was adjusted to 30°C, and a printing speed was adjusted to 60 m/min.

### (Water repellent treatment)

An aqueous dispersion of FEP (ND-1 manufactured by Daikin Industries), a water-soluble polyamideimide resin (HPC-1000 manufactured by Hitachi Chemical Co., Ltd.), and an ultraviolet absorber (Needral P-10 (trade name) manufactured by Taki Chemical Co., Ltd.) were added into water to prepare a coating liquid. The solid content of FEP was 10% by mass, the solid content of the water-soluble polyamideimide resin was 6% by mass, and the concentration of the ultraviolet absorber with respect to FEP was 3.8% by mass. The prepared coating liquid was applied onto one side of a polyimide sheet (UPIREX (registered trademark) manufactured by Ube Industries, Ltd.) having a thickness of 75 µm using a wire bar so as to obtain a film thickness of about 50 µm. The resulting product was subjected to application drying, and then was heated at 350°C for four hours to form a water repellent layer, and a water repellent sheet was obtained. For measurement of RMV, the above water repellent sheet was used. The water repellent sheet was perforated with a laser to form a nozzle. The resulting sheet was cut into portions having the same size by a laser to prepare a nozzle plate.

Under the above conditions, printed matters were formed continuously on 2000 sheets of coated paper, and maintenance of a nozzle surface was performed under the conditions listed in Table 3 or 4. Thereafter, in a similar manner, continuous image formation on 2000 sheets of coated paper and maintenance of a nozzle surface under the conditions listed in Table 3 or Table 4 were repeated twenty more times. In the former formation of a printed matter, it was visually measured whether white spots were generated in the 2000th image in each of the first, tenth, and twentieth trials. In a case where white spots were generated, the number of white spots was visually measured. These results were used for evaluation of the first, tenth, and twentieth trials.

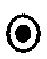 : Even in the twentieth trial, white spots were not generated in an image.

○: Until the tenth trial, white spots were not generated in an image, but in the twentieth trial, white spots were generated in an image.

□: In the first trial, white spots were not generated in an image, but in the tenth trial, 5 to 10 white spots were generated in an image.

×: In the first trial, white spots were not generated in an image, but in the tenth trial, 10 or more white spots were generated in an image.

××: In the first trial, 10 or more white spots were generated in an image.

### 2-2. Scratches on nozzle surface

Maintenance was performed 500 times on a nozzle surface of an inkjet image formation device provided with KM 1800i manufactured by Konica Minolta Co. (number of nozzles: 1776) under the conditions listed in Table 3 or Table 4, and then the vicinity of a nozzle was observed with a microscope. In a case where one or more scratches were observed in the vicinity of a nozzle, it was determined that the nozzle was damaged.

○: Damage was observed on less than 10% of the total nozzles.

□: Damage was observed on 10% or more and less than 30% of the total nozzles.

×: Damage was observed on 30% or more of the total nozzles.

### 2-3. Evaluation result

Test conditions and evaluation results are listed in Tables 3 and 4. Note that in Tables 3 and 4, the column of "ink type" describes an ink type used for evaluation of generation of the above white spots, and "moving speed", "pressure", "ink absorber", and "ink absorber temperature" describe a moving speed of an ink absorber subjected to maintenance of a nozzle surface at the time of evaluation of generation of white spots and scratches on the nozzle surface, a pressure pressed against the nozzle surface, the type of an ink absorber, and a temperature of the ink absorber, respectively. When the column of "ink absorber temperature" was 30°C, the ink absorber was not heated. When the column of "ink absorber temperature" was 80°C, the ink absorber was heated to 80°C with a 0.1 mm film heater (manufactured by Ichinen Jikco Ltd.) mounted under the ink absorber.

### [Table 3]

**Table 3: Ink types, maintenance conditions, and evaluation of Experiment Nos. 1 to 12**

| No. | Ink type | Maintenance conditions | | | | Evaluation | | Notes |
|---|---|---|---|---|---|---|---|---|
| | | Moving speed (mm/s) | Pressure (mg/mm²) | Ink absorber | Ink absorber temperature (°C) | White spots | Nozzle surface | |
| 1 | C | 10 | 10 | A | 30 | ○ | ○ | Example |
| 2 | C | 50 | 10 | A | 30 | 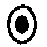 | ○ | Example |
| 3 | C | 100 | 10 | A | 30 | 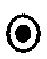 | ○ | Example |
| 4 | C | 250 | 10 | A | 30 | 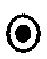 | ○ | Example |
| 5 | C | 500 | 10 | A | 30 | 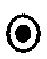 | ○ | Example |
| 6 | C | 750 | 10 | A | 30 | ○ | ○ | Example |
| 7 | C | 1000 | 10 | A | 30 | □ | ○ | Example |
| 8 | C | 250 | 1 | A | 30 | | ○ | Example |
| 9 | C | 250 | 100 | A | 30 | 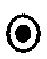 | ○ | Example |
| 10 | C | 250 | 250 | A | 30 | 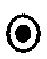 | ○ | Example |
| 11 | C | 250 | 500 | A | 30 | ○ | ○ | Example |
| 12 | C | 250 | 1000 | A | 30 | ○ | □ | Example |

### [Table 4]

**Table 4: Ink types, maintenance conditions, and evaluation of Experiment Nos. 13 to 26**

| No. | Ink type | Maintenance conditions | | | | Evaluation | | Notes |
|---|---|---|---|---|---|---|---|---|
| | | Moving speed (mm/s) | Pressure (mg/mm²) | Ink absorber | Ink absorber temperature (°C) | White spots | Nozzle surface | |
| 13 | C | 250 | 10 | B | 30 | 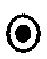 | ○ | Example |
| 14 | C | 250 | 10 | C | 30 | ○ | ○ | Example |
| 15 | C | 250 | 10 | D | 30 | ○ | □ | Example |
| 16 | B | 250 | 10 | A | 30 | □ | ○ | Example |
| 17 | D | 250 | 10 | A | 30 | ○ | ○ | Example |
| 18 | E | 250 | 10 | A | 30 | □ | ○ | Example |
| 19 | F | 250 | 10 | A | 30 | 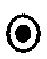 | ○ | Example |
| 20 | C | 250 | 10 | A | 80 | □ | □ | Example |
| 21 | A | 250 | 10 | A | 30 | ×× | × | Comparative Example |
| 22 | C | 0 | 10 | A | 30 | × | ○ | Comparative Example |
| 23 | C | 0 | 10 | A | 80 | □ | ○ | Comparative Example |
| 24 | C | 1500 | 10 | A | 30 | ×× | □ | Comparative Example |
| 25 | C | 250 | 1500 | A | 30 | | × | Comparative Example |
| 26 | C | 250 | 0.5 | A | 30 | ×× | ○ | Comparative Example |

Image formation was performed with a wax-containing ink. Thereafter, an ink absorber was moved at a speed of 10 mm/s or more and 1000 mm/s or less while the ink absorber was in contact with a nozzle surface at a contact pressure of 1 mg/mm² or more and 1000 mg/mm² or less, and maintenance of the nozzle surface was performed. As a result, white spots were less likely to be generated in an image, and the nozzle surface was less likely to be scratched (Experiment Nos. 1 to 20).

In particular, when comparison was made at the same contact pressure, white spots were still less likely to be generated in an image in a case where the speed of the ink absorber was 20 mm/s or more and 550 mm/s or less (Experiment Nos. 2 to 5).

When comparison was made at the same moving speed, white spots were still less likely to be generated in an image in a case where the contact pressure of the ink absorber was 50 mg/mm² or more and 1000 mg/mm² or less (Experiment Nos. 9 to 12), and white spots were further still less likely to be generated in an image in a case where the contact pressure of the ink absorber was 50 mg/mm² or more and 300 mg/mm² or less (Experiment Nos. 9 and 10).

When comparison was made at the same moving speed, a nozzle surface was less likely to be scratched in a case where the contact pressure of the ink absorber was 1 mg/mm² or more and 550 mg/mm² or less (Experiment Nos. 8 to 11).

When comparison was made at the same moving speed and contact pressure, a nozzle surface was less likely to be scratched in a case where maintenance was performed using an ink absorber including at least one material selected from polyester, nylon, and polypropylene on a surface in contact with the nozzle surface (Experiment Nos. 1, 13, and 14).

In a case where an ink contained a wax in an amount of more than 1% by mass and 5% by mass or less, generation of white spots could be further reduced by the method according to the present invention (Experiment Nos. 1 to 15, 17, and 19).

Meanwhile, when image formation was performed with an ink containing no wax and maintenance of a nozzle surface was performed by the method of the present invention, white spots were likely to be generated in an image and the nozzle surface was likely to be scratched (Experiment No. 21). A reason for this result is considered to be the following. That is, the ink contained no wax, and therefore gathering with neighboring droplets occurred, and white spots were generated in an image. In addition, no wax adhered to a nozzle surface, and therefore scratches were generated on the nozzle surface by direct rubbing of the nozzle surface by the ink absorber.

When image formation was performed with a wax-containing ink and then maintenance of a nozzle surface was performed without moving an ink absorber, white spots were likely to be generated in an image (Experiment No. 22). At this time, even if the nozzle surface was heated, white spots were likely to be generated in an image (Experiment No. 23). It is considered that this is because the ink absorber was not moved and therefore the wax adhering to the nozzle surface could not be sufficiently lowered in viscosity and removed.

When the moving speed of the ink absorber at the time of maintenance is larger than 1000 mm/s, white spots were likely to be generated in an image and the nozzle surface was likely to be scratched (Experiment No. 24). A reason for this result is considered to be the following. That is, a meniscus of an ink in the vicinity of a discharge port was broken due to movement of the ink absorber at a high speed, discharge became unstable, the ink absorber rubbed the nozzle surface at a high speed, and the nozzle surface was thereby scratched.

When the contact pressure of the ink absorber at the time of maintenance was larger than 1000 mg/mm², white spots were likely to be generated in an image, and the nozzle surface was likely to be scratched (Experiment No. 25). It is considered that this is because the nozzle was damaged due to the too large contact pressure of the ink absorber.

When the contact pressure of the ink absorber at the time of maintenance was smaller than 1 mg/mm², white spots were likely to be generated in an image (Experiment No. 26). It is considered that this is because crystals of a wax adhering to a nozzle surface could not be sufficiently removed due to the small contact pressure of the ink absorber.

### Industrial Applicability

According to the maintenance method of the present invention, even when an image is continuously formed by an inkjet method using a wax-containing ink, discharge bending of an ink can be less likely to occur. Therefore, the present invention can be used for forming a large amount of images by an inkjet method using a wax-containing ink, and is considered to contribute to further spread of the inkjet method.

### Reference Signs List

- 100: Maintenance device
- 110: Installation unit
- 120: Absorber movement unit
- 130: Pressing unit
- 200: Image formation device
- 210: Discharge head
- 211: nozzle
- 212: Discharge port
- 213: Nozzle surface
- 220: Conveyance unit
- 230: Irradiation unit
- 240: Ink tank
- 250: Support frame
- 251: Head movement unit
- 260: Ink flow path

## Claims

1. A maintenance method of a nozzle surface (213) provided with a discharge port (212) of a nozzle (211) of a discharge head (210) capable of discharging an inkjet ink containing a wax which reversibly undergoes a phase transition upon temperature change, a photopolymerizable compound, and a photopolymerization initiator, cured by irradiation with an active ray, the maintenance method **characterized by** a step of moving an ink absorber (300) at a speed of 10 mm/s or more and 1000 mm/s or less while the ink absorber (300) is in contact with the nozzle surface (213) at a contact pressure of 1 mg/mm² or more and 1000 mg/mm² or less.

2. The maintenance method according to claim 1, wherein the ink absorber (300) includes at least one material selected from polyester, nylon, and polypropylene.

3. An image formation method comprising:
a first step of discharging droplets of an inkjet ink containing a wax which reversibly undergoes a phase transition upon temperature change, a photopolymerizable compound, and a photopolymerization initiator, cured by irradiation with an active ray from a discharge port (212) of a nozzle (211) provided on a nozzle surface (213) of a discharge head (210) to cause the droplets to land on a recording medium (400);
a second step of irradiating the droplets of the inkjet ink which have landed with an active ray to cure the droplets; and
a third step of performing maintenance of the nozzle surface (213) of the discharge head (210), wherein the third step is performed including the maintenance method according to claim 1 or 2.

4. The image formation method according to claim 3, wherein the content of the wax in the inkjet ink is from 1.0% by mass or more and 5.0% by mass or less with respect to the total mass of the ink.

5. The image formation method according to claim 3 or 4, wherein the temperature of the ink absorber (300) in the third step is lower than the temperature at which the inkjet ink undergoes a phase transition.

6. A maintenance device (100) comprising:
an installation unit (110) that installs an ink absorber (300); and **characterized by**
a movement unit (120) that moves the ink absorber (300) at a speed of 10 mm/s or more and 1000 mm/s or less while the ink absorber (300) is in contact with a nozzle surface (213) provided with a discharge port (212) of a nozzle (211) of a discharge head (210) capable of discharging an inkjet ink containing a wax which reversibly undergoes a phase transition upon temperature change, a photopolymerizable compound, and a photopolymerization initiator, cured by irradiation with an active ray at a contact pressure of 1 mg/mm² or more and 1000 mg/mm² or less.

7. An inkjet image formation device (200) comprising:
a discharge head (210) including a nozzle surface (213) provided with a discharge port (212) of a nozzle (211) capable of discharging an inkjet ink containing a wax which reversibly undergoes a phase transition upon temperature change, a photopolymerizable compound, and a photopolymerization initiator, cured by irradiation with an active ray;
a conveyance unit (220) that conveys a recording medium (400);
an irradiation unit (230) that irradiates an upper surface of the conveyance unit (220) with an active ray from a light source; and
the maintenance device (100) according to claim 6.

## Patentansprüche

1. Verfahren zur Wartung einer Düsenoberfläche (213), welche mit einer Austragöffnung (212) einer Düse (211) eines Austragkopfes (210) versehen ist, wobei die Austragöffnung (212) zur Austragung einer Tintenstrahltinte befähigt ist, welche ein bei Temperaturänderung reversibel eine Phasenumwandlung vollziehendes Wachs, eine photopolymerisierbare Verbindung und einen Photopolymerisationsinitiator enthält und durch Bestrahlung mit aktiven Strahlen gehärtet wird;
wobei das Wartungsverfahren durch einen Schritt gekennzeichnet ist, welcher das Bewegen eines Tintenabsorbers (300) mit einer Geschwindigkeit von 10 mm/s oder mehr und 1000 mm/s oder weniger vorsieht, während der Tintenabsorber (300) bei einem Kontaktdruck von 1 mg/mm² oder mehr und 1000 mg/mm² mit der Düsenoberfläche (213) in Kontakt steht.

2. Wartungsverfahren gemäß Anspruch 1, wobei der Tintenabsorber (300) zumindest ein Material ausgewählt aus Polyester, Nylon und Polypropylen umfasst.

3. Bilderzeugungsverfahren, umfassend:
einen ersten Schritt in Form des Austragens von Tröpfchen einer Tintenstrahltinte, welche ein bei Temperaturänderung reversibel eine Phasenumwandlung vollziehendes Wachs, eine photopolymerisierbare Verbindung und einen Photopolymerisationsinitiator enthält und durch Bestrahlung mit aktiven Strahlen gehärtet wird, aus einer Austragöffnung (212) einer an einer Düsenoberfläche (213) eines Austragkopfes (210) bereitgestellten Düse (211), um ein Auftreffen der Tröpfchen auf einem Aufzeichnungsmedium (400) zu bewirken;
einen zweiten Schritt in Form des Bestrahlens der aufgetroffenen Tröpfchen der Tintenstrahltinte mit aktiven Strahlen, um die Tröpfchen zu härten; und
einen dritten Schritt in Form des Wartens der Düsenoberfläche (213) des Austragkopfes (210), wobei der dritte Schritt derart ausgeführt wird, dass er das Wartungsverfahren gemäß Anspruch 1 oder 2 beinhaltet.

4. Bilderzeugungsverfahren gemäß Anspruch 3, wobei der Gehalt an Wachs in der Tintenstrahltinte 1.0 Masse% oder mehr und 5.0 Masse% oder weniger, bezogen auf die Gesamtmasse der Tinte, beträgt.

5. Bilderzeugungsverfahren gemäß Anspruch 3 oder 4, wobei die Temperatur des Tintenabsorbers (300) im dritten Schritt unterhalb der Temperatur liegt, bei welcher die Tintenstrahltinte eine Phasenumwandlung vollzieht.

6. Wartungsvorrichtung (100), umfassend:
eine Installationseinheit (110), welche einen Tintenabsorber (300) installiert; und
**gekennzeichnet durch** eine Bewegungseinheit (120), welche den Tintenabsorber (300) mit einer Geschwindigkeit von 10 mm/s oder mehr und 1000 mm/s oder weniger bewegt, während der Tintenabsorber (300) bei einem Kontaktdruck von 1 mg/mm² oder mehr und 1000 mg/mm² oder weniger mit einer Düsenoberfläche (213) in Kontakt steht, die mit einer Austragöffnung (212) einer Düse (211) eines Austragkopfes (210) versehen ist, wobei die Austragöffnung (212) zur Austragung einer Tintenstrahltinte befähigt ist, welche ein bei Temperaturänderung reversibel eine Phasenumwandlung vollziehendes Wachs, eine photopolymerisierbare Verbindung und einen Photopolymerisationsinitiator enthält und durch Bestrahlung mit aktiven Strahlen gehärtet wird.

7. Tintenstrahlbilderzeugungsvorrichtung (200), umfassend:
einen Austragkopf (210) mit einer Düsenoberfläche (213), welche mit einer Austragöffnung (212) einer Düse (211) versehen ist, wobei die Austragöffnung (212) zur Austragung einer Tintenstrahltinte befähigt ist, welche ein bei Temperaturänderung reversibel eine Phasenumwandlung vollziehendes Wachs, eine photopolymerisierbare Verbindung und einen Photopolymerisationsinitiator enthält und durch Bestrahlung mit aktiven Strahlen gehärtet wird;
eine Transporteinheit (220), welche ein Aufzeichnungsmedium (400) transportiert;
eine Bestrahlungseinheit (230), welche eine Oberfläche der Transporteinheit (220) mit aktiven Strahlen aus einer Lichtquelle bestrahlt; und
die Wartungsvorrichtung (100) gemäß Anspruch 6.

## Revendications

1. Procédé d'entretien de la surface d'une buse (213) dotée d'une ouverture d'évacuation (212) d'une buse (211) d'une tête d'évacuation (210) capable d'évacuer une encre pour jet d'encre contenant une cire qui subit réversiblement une transition de phase lors d'un changement de température, un composé photopolymérisable et un initiateur de photopolymérisation, durcie par irradiation avec un rayon actif, le procédé d'entretien étant **caractérisé par**
une étape consistant à déplacer un absorbeur d'encre (300) à une vitesse de 10 mm/s ou plus et 1000 mm/s ou moins pendant que l'absorbeur d'encre (300) est en contact avec la surface de la buse (213) à une pression de contact de 1 mg/mm² ou plus et 1000 mg/mm² ou moins.

2. Procédé d'entretien selon la revendication 1, dans laquelle l'absorbeur d'encre (300) inclut au moins un matériau choisi parmi un polyester, un nylon et un polypropylène.

3. Procédé de formation d'image comprenant :
une première étape consistant à évacuer des gouttelettes d'une encre pour jet d'encre contenant une cire qui subit réversiblement une transition de phase lors d'un changement de température, un composé photopolymérisable et un initiateur de photopolymérisation, durcie par irradiation avec un rayon actif, à partir d'une ouverture d'évacuation (212) d'une buse (211) disposée sur la surface d'une buse (213) d'une tête d'évacuation (210) afin que les gouttelettes atterrissent sur un milieu d'enregistrement (400);
une deuxième étape consistant à irradier les gouttelettes de l'encre pour jet d'encre qui ont atterri avec un rayon actif pour durcir les gouttelettes ; et
une troisième étape consistant à mettre en œuvre l'entretien de la surface de la buse (213) de la tête d'évacuation (210), laquelle troisième étape est mise en œuvre en incluant le procédé d'entretien selon la revendication 1 ou 2.

4. Procédé de formation d'image selon la revendication 3, dans lequel la teneur en la cire dans l'encre pour jet d'encre est de 1,0 % en masse ou plus et 5,0 % en masse ou moins par rapport à la masse totale de l'encre.

5. Procédé de formation d'image selon la revendication 3 ou 4, dans lequel la température de l'absorbeur d'encre (300) dans la troisième étape est inférieure à la température à laquelle l'encre pour jet d'encre subit une transition de phase.

6. Dispositif d'entretien (100), comprenant :
une unité d'installation (110) qui installe un absorbeur d'encre (300) ; et **caractérisé en ce que**
une unité de déplacement (120) qui déplace l'absorbeur d'encre (300) à une vitesse de 10 mm/s ou plus et 1000 mm/s ou moins pendant que l'absorbeur d'encre (300) est en contact avec la surface d'une buse (213) dotée d'une ouverture d'évacuation (212) d'une buse (211) d'une tête d'évacuation (210) capable d'évacuer une encre pour jet d'encre contenant une cire qui subit réversiblement une transition de phase lors d'un changement de température, un composé photopolymérisable et un initiateur de photopolymérisation, durcie par irradiation avec un rayon actif à une pression de contact de 1 mg/mm² ou plus et 1000 mg/mm² ou moins.

7. Dispositif de formation d'image par jet d'encre (200), comprenant :
une tête d'évacuation (210) incluant la surface d'une buse (213) dotée d'une ouverture d'évacuation (212) d'une buse (211) capable d'évacuer une encre pour jet d'encre contenant une cire qui subit réversiblement une transition de phase lors d'un changement de température, un composé photopolymérisable et un initiateur de photopolymérisation, durcie par irradiation avec un rayon actif;
une unité de transport (220) qui transporte un milieu d'enregistrement (400);
une unité d'irradiation (230) qui irradie une surface supérieure de l'unité de transport (220) avec un rayon actif à partir d'une source lumineuse ; et
le dispositif d'entretien (100) selon la revendication 6.
